# EUROPEAN PATENT APPLICATION

(11) **EP 4 020 647 A1**
(43) Date of publication of application: **29.06.2022**
(21) Application number: 20853680.5
(22) Date of filing: 28.07.2020
(51) Int. Cl.: H01M 10/04

(54) **RECHARGEABLE BATTERY**

(30) Priority: 19.08.2019 KR 20190101311
(71) Applicant: Samsung SDI Co., Ltd., Yongin-si, Gyeonggi-do 17084 (KR)
(72) Inventor: LEE, Jong-Ha, Yongin-si, Gyeonggi-do 17084 (KR); KIM, Youmee, Yongin-si, Gyeonggi-do 17084 (KR); CHUN, Byoungmin, Yongin-si, Gyeonggi-do 17084 (KR)
(74) Representative: Gulde & Partner
(86) International application number: PCT/KR2020/009943
(87) International publication number: WO 2021/033940

(57) **Abstract**

One aspect of the present invention is to provide a rechargeable battery that increases capacity and facilitates connection of the lead tab to the electrode terminal by reducing the thickness at which the electrode terminal is installed. A rechargeable battery according to an embodiment of the present invention includes: an electrode assembly formed by disposing and winding a separator between a first electrode and a second electrode; a case facing one of wound ends of the electrode assembly and accommodating the electrode assembly; a cap plate facing the other of the wound ends, and closing and sealing an opening of the case; an electrode terminal installed in a terminal hole formed in the cap plate by interposing an insulating sealing material; a first lead tab connecting the first electrode to the electrode terminal; and a second lead tab connecting the second electrode to the case.

## Description

### [Technical Field]

The present invention relates to a rechargeable battery. More particularly, the present invention relates to a small rechargeable battery.

### [Background Art]

Unlike a primary battery that is incapable of being recharged, a rechargeable battery can be repeatedly charged and discharged. A low capacity rechargeable battery has been used for small electronic devices such as a mobile phone, a laptop computer, and a camcorder, and a large capacity battery has been widely used as a power source for driving a motor of a hybrid vehicle.

A representative rechargeable battery includes a nickel-cadmium (Ni-Cd) battery, a nickel-hydrogen (Ni-MH) battery, a lithium (Li) battery, and a lithium ion (Liion) rechargeable battery. Particularly, the lithium ion secondary battery has a higher operation voltage than the nickel-cadmium battery or the nickel-hydrogen battery that is mainly used as a portable electric equipment power source by about three times. Also, the lithium ion secondary battery is widely used in an aspect that energy density per unit weight is high.

In particular, as a demand for wearable devices such as headphones, earphones, smartwatches, and body-mounted medical devices which use Bluetooth has increased, the need for rechargeable batteries of which energy density is high and is ultra-small has been increasing.

As an example, the ultra-small rechargeable battery includes a coin cell or a button cell. In the case of the coin cell or the button cell button cell, since the entire height is low, if the thickness of the part where the electrode terminal is installed increases, the battery capacity may be reduced. Also, since the end of the bent lead tab is adjacent to both ends of the wound electrode assembly whose height is low compared to the diameter, the workability for welding the end of the lead tab and the electrode terminal may deteriorate.

The above information disclosed in this Background section is only for enhancement of understanding of the background of the invention, and therefore it may contain information that does not form the prior art that is already known in this country to a person of ordinary skill in the art.

### [Disclosure]

One aspect of the present invention is to provide a rechargeable battery that has increased capacity by reducing the thickness where the electrode terminal is installed, and facilitates the connection of the lead tab to the electrode terminal.

A rechargeable battery according to an embodiment of the present invention includes: an electrode assembly formed by disposing and winding a separator between a first electrode and a second electrode; a case facing one of wound ends of the electrode assembly and accommodating the electrode assembly; a cap plate facing the other of the wound ends, and closing and sealing an opening of the case; an electrode terminal installed in a terminal hole formed in the cap plate by interposing an insulating sealing material; a first lead tab connecting the first electrode to the electrode terminal; and a second lead tab connecting the second electrode to the case.

The insulating sealing material may be formed by a glass seal.

The electrode terminal may be formed as a plate with the same thickness as that of the cap plate.

The first lead tab may be connected to the electrode terminal, and the second lead tab may be connected to the case.

The electrode terminal may include a plate part of a second thickness t2 that is thinner than a first thickness t1 of the cap plate, and a both-sided flange part protruded from the exterior circumference of the plate part to both sides in the thickness direction and connected to the inner surface of the terminal hole with an insulating sealing material with a first height h1.

The both-sided flange part may be formed with the same first height (h1=t1) as the first thickness of the cap plate.

The first lead tab may be connected to the plate part by welding, and the second lead tab may be connected to the case by welding.

The electrode terminal may include a plate part of a third thickness t3 that is thinner than the first thickness t1 of the cap plate, and a one-sided flange part protruded from the exterior circumference of the plate part to one side in the thickness direction and connected to the inner surface of the terminal hole with an insulating sealing material with a second height h2.

The one-sided flange part may be formed with a second height (h2>t1) that is larger than the first thickness t1 of the cap plate.

The one-sided flange part may be disposed to be centered in the thickness direction in the terminal hole, and the insulating sealing material may be formed in a symmetrical structure on the inside and outside along the thickness direction.

The one-sided flange part may be disposed to be centered in the thickness direction in the terminal hole, the terminal hole may have a protrusion protruding from the center of the thickness direction toward the center of the diameter direction, and the insulating sealing material may form a symmetrical structure on the inside and outside along the thickness direction while filling the protrusion.

The one-sided flange part may be disposed to be biased to the inner surface side rather than the outer surface of the cap plate at the terminal hole, the plate part may be disposed by forming a horizontal plane with the outer surface of the cap plate in the terminal hole, and the insulating sealing material may form a horizontal plane with the outer surface of the cap plate and the outer surface of the plate part, and form a structure that is biased inward along the thickness direction.

The rechargeable battery according to an embodiment of the present invention may further include a first insulating member interposed between the second lead tab and the electrode assembly at the bottom side of the case.

The rechargeable battery according to an embodiment of the present invention may further include a second insulating member interposed between the first lead tab and the electrode assembly at the cap plate side.

The rechargeable battery according to an embodiment of the present invention may further include a third insulating member interposed between the first lead tab and the cap plate.

A height H may be set as the minimum distance between the outer planes of the case and the cap plate, a diameter D may be set as the maximum distance of the case exterior circumference, and the ratio of the height to the diameter may be 1 or less (H/D≤1).

The cap plate and the electrode terminal may be formed of stainless steel.

As such, the embodiment of the present invention installs the electrode terminal by interposing the insulating sealing material in the terminal hole formed in the cap plate, and connects the electrode terminal to the electrode assembly with the first lead tab, so the thickness at which the electrode terminal is installed is reduced, thereby increasing the capacity. In addition, an embodiment of the present invention may facilitate the connection of the first lead tab and the electrode terminal because the first lead tab is laser welded to the thin electrode terminal of the thin thickness.

### [Description of the Drawings]

FIG. 1 is an exploded perspective view of a rechargeable battery according to a first embodiment of the present invention.
FIG. 2 is a cross-sectional view taken along a line II - II of FIG. 1.
FIG. 3 is a cross-sectional view of a rechargeable battery according to a second embodiment of the present invention.
FIG. 4 is an exploded perspective view of a rechargeable battery according to a third embodiment of the present invention.
FIG. 5 is a cross-sectional view taken along a line V-V of FIG. 4.
FIG. 6 is a cross-sectional view of a rechargeable battery according to a fourth embodiment of the present invention.
FIG. 7 is a cross-sectional view of a rechargeable battery according to a fifth embodiment of the present invention.

### [Mode for Invention]

The present invention will be described more fully hereinafter with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

A rechargeable battery according to an embodiment of the present invention is an ultra-small battery, and may be a coin cell or a button cell. Here, the coin cell or the button cell is a thin coin-type or button-type cell, and means a battery having a ratio (H/D) of a height (H) to a diameter (D) of 1 or less.

Since the coin cell or the button cell is mainly cylindrical, a horizontal cross-section is circular, but the present invention is not limited thereto, and a horizontal cross-section may be oval or polygonal. In this case, the diameter means the maximum distance based on the horizontal direction of the battery, and the height means the minimum distance from the flat bottom surface of the battery to the upper cross-section of the flat top of the battery.

However, the present invention is not limited to the coin cell or the button cell that is an example of the present invention, and a battery of the present invention may be a cylindrical-type or pin-type battery. Hereinafter, a case in which a rechargeable battery according to an embodiment of the present invention is a coin cell or a button cell will be described in detail as an example.

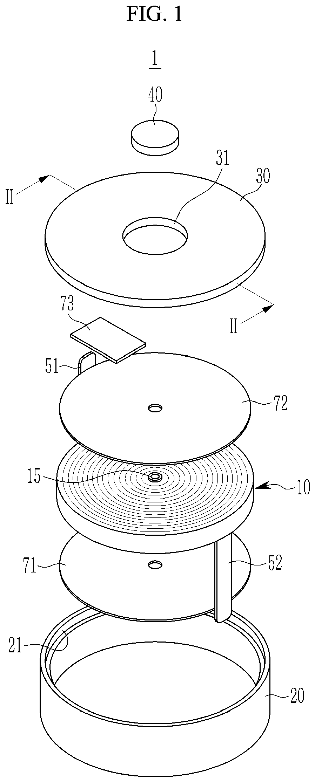

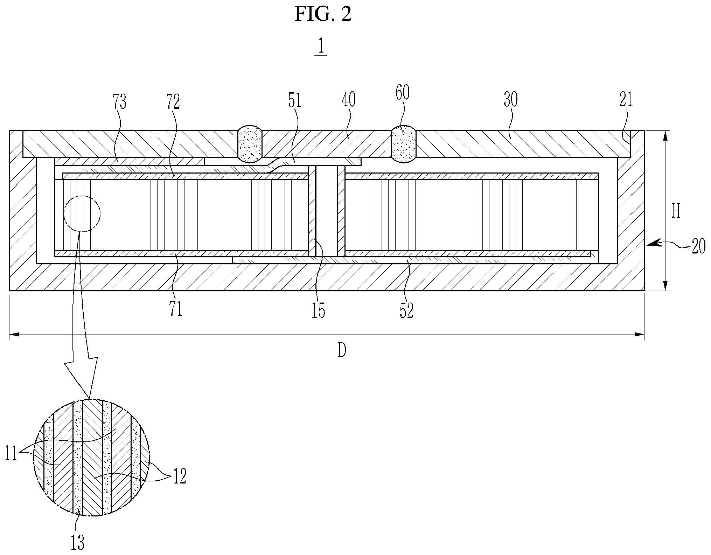

FIG. 1 is an exploded perspective view of a rechargeable battery according to a first embodiment of the present invention, and FIG. 2 is a cross-sectional view taken along a line II - II of FIG. 1. Referring to FIG. 1 and FIG. 2, the rechargeable battery 1 according to the first embodiment includes an electrode assembly 10, a case 20, a cap plate 30, an electrode terminal 40, a first lead tab 51, and a second lead tab 52.

The electrode assembly 10 includes a first electrode (11, for example, a negative electrode) and a second electrode (12, for example, a positive electrode) provided on respective surfaces of a separator 13 that is an electrical insulating material, and is formed by winding the first electrode 11, the separator 13 and the second electrode 12. Accordingly, the electrode assembly 10 may have a jelly-roll shape, and is configured to charge and discharge a current.

At this time, the wound axis of the electrode assembly 10 may be arranged parallel to the height direction of the case 20, and the lower surface (one end of both ends) and the upper surface (the other end of both ends) of the electrode assembly 10 are flat and parallel to each other.

The electrode assembly 10 has a center pin 15 in a place of the wound shaft. When welding the first and second lead tabs 51 and 52 to the electrode terminal 40 and the case 20, one end of the center pin 15 adheres the first lead tab 51 and the electrode terminal 40 and the other adheres the second lead tab 52 and the case 20, thereby improving the welding performance. The center pin 15 is formed as a cylinder to enable the flow of a gas and an electrolyte solution therein. Also, the center pin may be formed as a circular cylinder (not shown).

Hereinafter, a case where the first electrode 11 and the second electrode 12 are a negative electrode and a positive electrode is described as an example, but the present invention is not limited thereto, and the first electrode 11 and the second electrode 12 may be a positive electrode and a negative electrode, respectively.

The negative electrode (11, a first electrode) is formed of a long band shape, and includes a negative electrode coating region as a region in which an active material layer is coated on a current collector of a metal foil (e.g., a Cu foil) and a negative uncoated region of a region in which the active material is not coated. The negative uncoated region may be positioned at one end of one side in the length direction of the negative electrode.

The positive electrode (12, a second electrode) is formed of a long band shape, and includes a positive electrode coating region as a region in which a positive electrode active material layer is coated to a current collector of a metal foil (e.g., an AI foil) and a positive electrode uncoated region as a region where the active material is not coated. The positive electrode uncoated region may be disposed at the end of one side of the positive electrode in the length direction.

The case 20 allows the electrode assembly 10 to be inserted through an opening 21 formed on one side and accommodated. The case 20 sets a space inside which the electrode assembly 10 and the electrolyte solution are accommodated. For example, the case 20 may have a cylindrical shape with a low height, and may have a circular opening 21 at an upper end to insert the electrode assembly 10 of the cylindrical shape.

The cap plate 30 closes and seals the opening 21 of the case 20 and may be coupled and welded to the opening 21. The cap plate 30 is formed corresponding to the opening 21 and has a terminal hole 31.

The electrode terminal 40 is installed with the insulating sealing material 60 in the terminal hole 31 through the sealing process. That is, the electrode terminal 40 and the cap plate 30 are electrically insulated and have different polarities from each other. Since the insulating sealing material 60 does not exist in the disassembled state but in the assembled state, it is omitted FIG. 1 and is shown in FIG. 2.

In the electrode assembly 10, the first lead tab (51, a negative electrode tab) is fixedly installed on the negative electrode 11, and the second lead tab (52, a positive electrode tab) is fixedly installed on the positive electrode 12. Therefore, in the first embodiment, the electrode terminal 40 has a negative electrode property, and the cap plate 30 has a positive electrode property. Although not shown separately, the electrode terminal 40 may have a positive electrode property and the cap plate 30 may have a negative electrode property.

The first lead tab 51 and the second lead tab 52 are installed in the negative uncoated region and the positive electrode uncoated region, respectively, and after extending parallel to the wound axis, their ends may be bent toward the wound axis. For example, the bent ends of the first lead tab 51 and the second lead tab 52 may be disposed to the upper portion (the cap plate 30 side) and the lower portion (the case 20 side) of the electrode assembly 10, respectively.

The first lead tab 51 is made of an electrically conductivity material such as copper or nickel, and is directly electrically connected to the electrode terminal 40. For example, the bent end of the first lead tab 51 may be connected to the electrode terminal 40 by laser welding.

The second lead tab 52 is made of an electrically conductivity material such as nickel and aluminum, and is electrically connected to the case 20. For example, the bent end of the second lead tab 52 may be connected to the bottom surface of the case 20 by laser welding.

The insulating sealing material 60 interposed between the electrode terminal 40 and the terminal hole 31 and around the electrode terminal 40 may be formed of, for example, a glass seal. The insulating sealing material 60 electrically insulates the cap plate 30 and the electrode terminal 40 while sealing between the inner surface of the terminal hole 31 and the outer surface of the electrode terminal 40.

If the insulating sealing material 60 is a glass seal, the cap plate 30 and the electrode terminal 40 may be made of stainless steel. In addition, the insulating sealing material 60 must be able to overcome a thermal impact even at a high temperature of about 1000 °C.

For example, the insulating sealing material 60 should have crack resistance when undergoing a thermal impact and thermal expansion due the charging and discharging and during the welding of the first lead tab 51 to the electrode terminal 40. The glass seal may overcome this thermal impact. The area of the electrode terminal 40 may be set so that the insulating sealing material 60 may be applied within a range that can overcome the required thermal impact.

As an example, since the electrode terminal 40 is formed of a plate having the same thickness t as the thickness t of the cap plate 30, air-tightness performance and bonding performance by the insulating sealing material 60 may be improved. And in the cap plate 30 and the electrode terminal 40, the outer surfaces are formed to be coplanar, and the inner surfaces are formed to be coplanar.

The insulating sealing material 60 is formed by injecting molten glass between the circumferential outer surface of the electrode terminal 40 and the inner surface of the terminal hole 31 due to a process characteristic, so it may be more protruded than the outer surfaces of the electrode terminal 40 and the cap plate 30 and may be more protruded than the inner surfaces.

In the first embodiment, the first lead tab 51 is connected to the electrode terminal 40 formed as a plate, and the second lead tab 52 is connected to the case 20. First lead tab 51 is welded to the electrode terminal 40, but the electrode terminal 40 is not protruded outward and forms the same outer surface as the cap plate 30.

Since the first lead tab 51 is laser welded directly to the electrode terminal 40, the process of connecting the first lead tab 51 to the electrode terminal 40 is facilitated. And the second lead tab 51 is laser welded directly to the bottom of case 20.

At this time, the center pin 15 supports the first and second lead tabs 51 and 52 so that the first lead tab 51 and the electrode terminal 40 are in close contact, and the second lead tab 52 and the case 20 are in close contact, thereby improving the welding performance of each.

Again referring to FIG. 1 and FIG. 2, the rechargeable battery 1 of the first embodiment further includes a first insulating member 71 interposed between the second lead tab 52 and the electrode assembly 10 at the bottom side of the case 20. The first insulating member 71 electrically insulates between the electrode assembly 10 and the bent second lead tab 52.

The rechargeable battery 1 of the first embodiment further includes, at the cap plate 30 side, a second insulating member 72 interposed between the first lead tab 51 and the electrode assembly 10, and a third insulating member 73 interposed between the first lead tab 51 and the cap plate 30.

The second insulating member 72 electrically insulates between the electrode assembly 10 and the bent first lead tab 51. The third insulating member 73 electrically further insulates between the bent first lead tab 51 and the cap plate 30.

In the present embodiment, the first and second insulating members 71 and 72 have a through hole through which the center pin 15 passes so that the center pin 15 more firmly supports the first and second lead tabs 51 and 52. Although not shown, the first and second insulating members may not have a through hole, and the center pin may support the first and second insulating members to support the first and second lead tabs.

Although not shown, the electrode assembly 10 is covered with an insulating tape along the diameter direction of the external circumferential surface. The insulating tape electrically insulates between the external circumferential surface of the electrode assembly 10 and the inner surface of case 20 while protecting the outside of the electrode assembly 10.

When the rechargeable battery 1 of the first embodiment is applied to a coin-type battery or a button-type battery, the height H is set as the minimum distance between the outer planes of the case 20 and the cap plate 30, and the diameter D is set as the maximum distance of the exterior circumference of the case 20. Also, the ratio of the height H for the diameter D is 1 or less (H/D≤1).

As such, in the case of the coin-type or button-type battery with a low height compared to the diameter, since the connection structure between the electrode terminal 40 and the first lead tab 51 is thinly formed, in the case of having the same height H and diameter D, as compared with the case where the connection structure is thick, while the size of the electrode assembly 10 increases, the capacity of the rechargeable battery 1 may be increased as a whole.

Hereinafter, a second embodiment of the present invention is described. Compared with the first embodiment, the same components are omitted and different components are described.

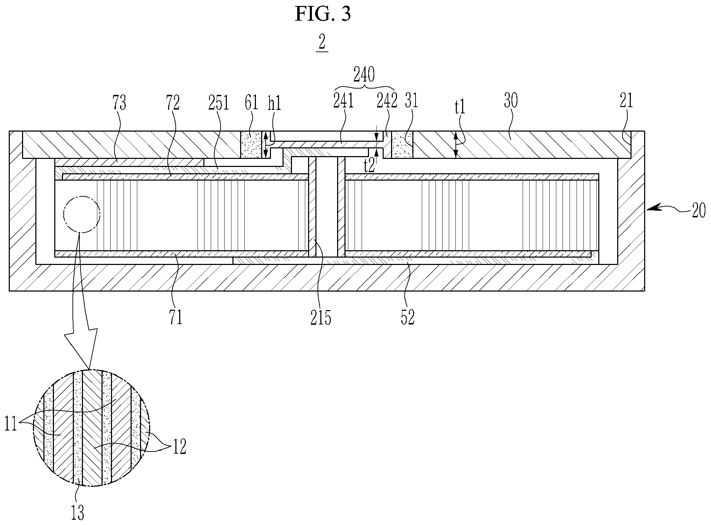

FIG. 3 is a cross-sectional view showing a rechargeable battery according to a second embodiment of the present invention. Referring to FIG. 3, in the rechargeable battery 2 of the second embodiment, the electrode terminal 240 includes a plate part 241 and a both-sided flange part 242.

The plate part 241 is formed with a second thickness (t2<t1) that is thinner than the first thickness t1 of the cap plate 30. The both-sided flange part 242 is protruded from the exterior circumference of the plate part 241 to both sides in the thickness direction, has a first height h1, and is connected to the inner surface of the terminal hole 31 with an insulating sealing material 61.

Since the both-sided flange part 242 is formed with the same first height (h1=t1) as the first thickness t1 of the cap plate 30, the air-tightness performance and the joint performance by the insulating sealing material 61 may be improved. And in the both-sided flange part 242 of the electrode terminal 240 and the cap plate 30, the outer surfaces are formed in the same plane, and the inner surfaces are formed in the same plane.

The plate part 241 is positioned lower than the outer surface of the cap plate 30. The insulating sealing material 61 may be protruded more than the outer surfaces of the electrode terminal 40 and the cap plate 30, and may be protruded more than the inner surfaces due to the process characteristics.

In the second embodiment, the first lead tab 251 is connected to the plate part 241 by welding, and the second lead tab 52 is connected to the case 20 by welding. Since the first lead tab 251 is laser welded to the plate part 241, the welding is easy. Therefore, since the plate part 241 is formed with a second thickness t2 that is thinner than the first thickness t1, the laser welding with the first lead tab 251 becomes easier.

In this case, the center pin 215 supports the first and second lead tabs 251 and 52 so that the first lead tab 251 and the plate part 241 of the electrode terminal 240 are closely in contact with each other, and the second lead tab 52 and the case 20 are closely in contact with each other, thereby improving the welding performance of each.

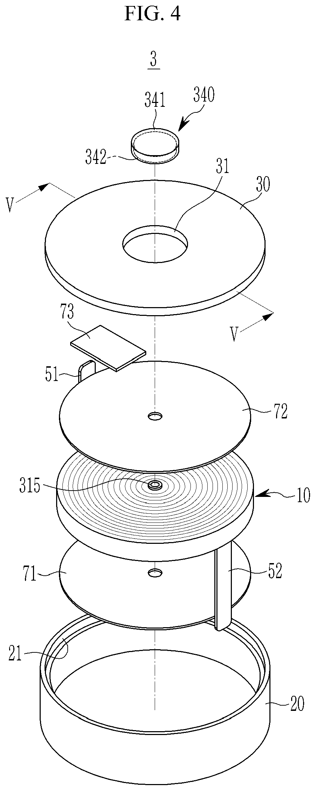

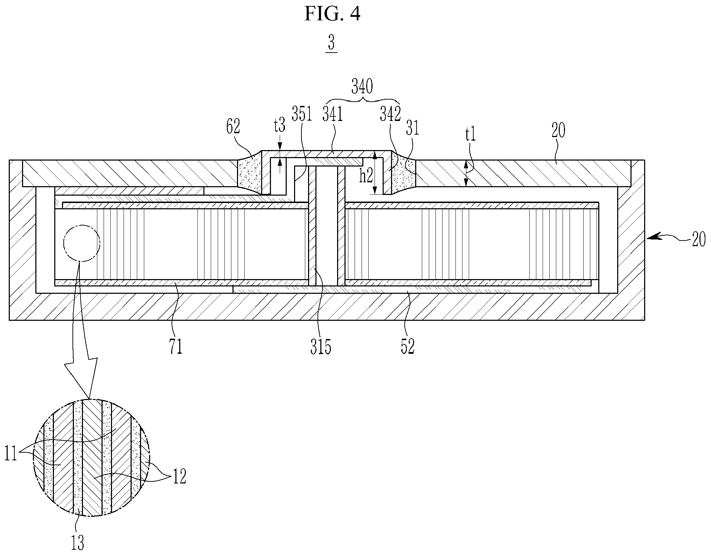

FIG. 4 is an exploded perspective view of a rechargeable battery according to a third embodiment of the present invention, and FIG. 5 is a cross-sectional view taken along a line V-V of FIG. 4. Referring to FIG. 4 and FIG. 5, in the rechargeable battery 3 of the third embodiment, the electrode terminal 340 includes a plate part 341 and a one-sided flange part 342.

The plate part 341 is formed with a third thickness t3 that is thinner than the first thickness t1 of the cap plate 30. The one-sided flange part 342 is protruded from the exterior circumference of the plate part 341 to one side in the thickness direction, has a second height h2, and is connected to the inner surface of the terminal hole 31 with the insulating sealing material 62.

The one-sided flange part 342 is formed with a second height (h2>t1) that is greater than the first thickness t1 of the cap plate 30. The second height h2 increases the sealing area with the terminal hole 31 by the insulating sealing material 62, thereby improving the air-tightness performance and the bonding performance.

And the one-sided flange part 342 is disposed at the center of the thickness direction in the terminal hole 31, and the insulating sealing material 62 is formed symmetrically on the inside and outside along the thickness direction. The outer side means the outer side of the rechargeable battery 3 based on the cap plate 30, and the inner side means the inner side of the rechargeable battery 3 based on the cap plate 30.

That is, the plate part 341 is more protruded out of the outer surface of cap plate 30, and the one-sided flange part 342 is more protruded into the inner surface of the cap plate 30. Therefore, the insulating sealing material 62 may seal the one-sided flange part 342 and the terminal hole 31 while maintaining the balance of the bonding performance on the outside and inside in the thickness direction.

Also, since the second height h2 of the one-sided flange part 342 is larger than the first thickness t1 of the cap plate 30, the insulating sealing material 62 is formed thickly on the one-sided flange part 342 and thinly on the cap plate 30 side, and forms an inclined plane therebetween.

In the third embodiment, the first lead tab 351 is connected to the plate part 341 by welding, and the second lead tab 52 is connected to the case 20 by welding. Since the first lead tab 351 is laser welded to the plate part 341, the welding is easy. Therefore, as the plate part 341 is formed with the third thickness t3 that is thinner than first thickness t1, the laser welding with the first lead tab 251 becomes easier.

In addition, since the plate part 341 is positioned more outward in the thickness direction than the inner surface of the cap plate 30, the first lead tab 351 is positioned inside the one-sided flange part 342. That is, by the one-sided flange part 342, the welding space between the plate part 341 and the first lead tab 351 may be secured larger in the thickness direction.

In this case, the center pin 315 supports the first and second lead tabs 351 and 52 to firmly closely contact the first lead tab 351 and the plate part 341 of the electrode terminal 340, and the second lead tab 52 and the case 20, thereby Improving the welding performance.

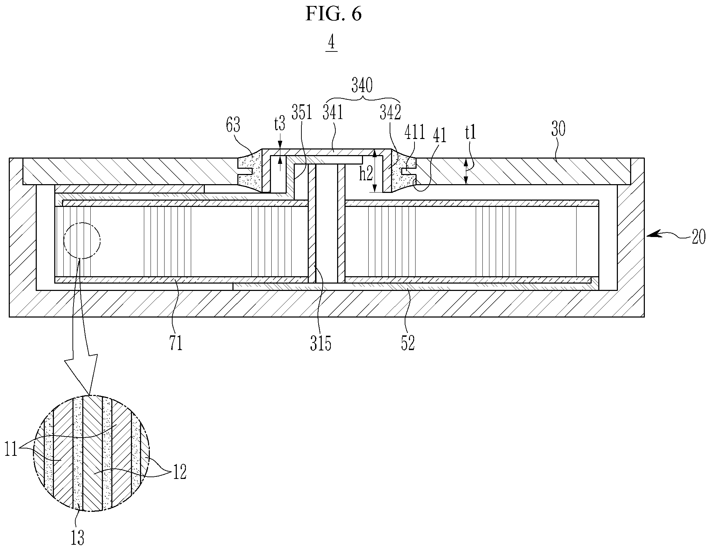

FIG. 6 is a cross-sectional view of a rechargeable battery according to a fourth embodiment of the present invention. Referring to FIG. 6, in the rechargeable battery 4 of the fourth embodiment, the one-sided flange part 342 of the electrode terminal 340 is disposed at the center of the thickness direction in the terminal hole 41.

The terminal hole 41 further has a protrusion 411 protruding from the thickness direction center toward the diameter direction center. The insulating sealing material 63 forms a symmetrical structure on the inside and outside along the thickness direction while filling the protrusion 411.

At this time, the insulating sealing material 63 increases the bonding area between the one-sided flange part 342 and the terminal hole 41 due to the protrusion 411, so that the sealing performance and bonding performance may be further improved.

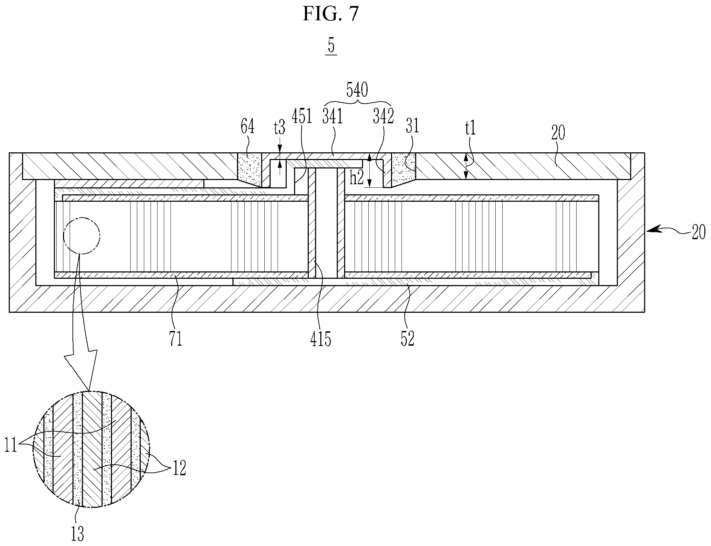

FIG. 7 is a cross-sectional view of a rechargeable battery according to a fifth embodiment of the present invention. Referring to FIG. 7, in the rechargeable battery 5 of the fifth embodiment, a plate part 341 of the electrode terminal 540 is disposed to form the horizontal surface with the outer surface of the cap plate 30 at the terminal hole 31. The electrode terminal 540, that is, the one-sided flange part 342, is biased and disposed from the terminal hole 31 to the inner surface side.

The insulating sealing material 64 forms the horizontal plane with the outer surface of the cap plate 30 and the outer surface of plate part 341, and forms a structure that is biased inward along the thickness direction by the one-sided flange part 342.

At this time, the insulating sealing material 64 secures the bonding area with the one-sided flange part 342 and the terminal hole 31 to secure the sealing performance and the bonding performance while preventing the electrode terminal 540 from being protruded out of the outer surface of the cap plate 30.

In this case, the center pin 415 supports the first and second lead tabs 451 and 52 to firmly adhere the first lead tab 451 and the plate part 341 of the electrode terminal 340, and the second lead tab 52 and the case 20, thereby improving the welding performance of each.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

### <Description of symbols>

| | | | |
|---|---|---|---|
| 1, 2, 3, 4, 5: | rechargeable battery | 10: | electrode assembly |
| 13: | separator | 11: | first electrode (negative electrode) |
| 12: | second electrode (positive electrode) | 15, 215, 315, 415: | center pin |
| 20: | case | 21: | opening |
| 30: | cap plate | 31, 41: | terminal hole |
| 40, 240, 340, 540: | electrode terminal | 51, 251, 351, 451: | first lead tab |
| 52: | second lead tab | 60, 61, 62, 63, 64: | insulating sealing material |
| 71: | first insulating member | 72: | second insulating member |
| 73: | third insulating member | 24, 341: | plate part |
| 242: | both-sided flange part | 342: | one-sided flange part |
| 411: | protrusion | D: | diameter |
| H: | height | h1: | first height |
| t: | thickness | t1: | first thickness |
| t2: | second thickness | t3: | third thickness |

## Claims

1. A rechargeable battery comprising:
an electrode assembly formed by disposing and winding a separator between a first electrode and a second electrode;
a case facing one of wound ends of the electrode assembly and accommodating the electrode assembly;
a cap plate facing the other of the wound ends, and closing and sealing an opening of the case;
an electrode terminal installed in a terminal hole formed in the cap plate by interposing an insulating sealing material;
a first lead tab connecting the first electrode to the electrode terminal; and
a second lead tab connecting the second electrode to the case.

2. The rechargeable battery of claim 1, wherein
the insulating sealing material is formed by a glass seal.

3. The rechargeable battery of claim 1, wherein
the electrode terminal is formed as a plate with the same thickness as that of the cap plate.

4. The rechargeable battery of claim 1, wherein
the first lead tab is connected to the electrode terminal, and
the second lead tab is connected to the case.

5. The rechargeable battery of claim 1, wherein
the electrode terminal includes
a plate part of a second thickness t2 that is thinner than a first thickness t1 of the cap plate, and
a both-sided flange part protruded from the exterior circumference of the plate part to both sides in the thickness direction and connected to the inner surface of the terminal hole with an insulating sealing material with a first height h1.

6. The rechargeable battery of claim 5, wherein
the both-sided flange part is formed with the same first height (h1=t1) as the first thickness of the cap plate.

7. The rechargeable battery of claim 5, wherein
the first lead tab is connected to the plate part by welding, and
the second lead tab is connected to the case by welding.

8. The rechargeable battery of claim 1, wherein
the electrode terminal includes
a plate part of a third thickness t3 that is thinner than the first thickness t1 of the cap plate, and
a one-sided flange part protruded from the exterior circumference of the plate part to one side in the thickness direction and connected to the inner surface of the terminal hole with an insulating sealing material with a second height h2.

9. The rechargeable battery of claim 8, wherein
the one-sided flange part is formed with a second height (h2>t1) that is larger than the first thickness t1 of the cap plate.

10. The rechargeable battery of claim 9, wherein
the one-sided flange part is disposed to be centered in the thickness direction in the terminal hole, and
the insulating sealing material is formed in a symmetrical structure on the inside and outside along the thickness direction.

11. The rechargeable battery of claim 9, wherein
the one-sided flange part is disposed to be centered in the thickness direction in the terminal hole,
the terminal hole has a protrusion protruding from the center of the thickness direction toward the center of the diameter direction, and
the insulating sealing material forms a symmetrical structure on the inside and outside along the thickness direction while filling the protrusion.

12. The rechargeable battery of claim 9, wherein
the one-sided flange part is disposed to be biased to the inner surface side rather than the outer surface of the cap plate at the terminal hole,
the plate part is disposed by forming a horizontal plane with the outer surface of the cap plate in the terminal hole, and
the insulating sealing material forms a horizontal plane with the outer surface of the cap plate and the outer surface of the plate part, and forms a structure that is biased inward along the thickness direction.

13. The rechargeable battery of claim 1, further comprising
a first insulating member interposed between the second lead tab and the electrode assembly at the bottom side of the case.

14. The rechargeable battery of claim 13, further comprising
a second insulating member interposed between the first lead tab and the electrode assembly at the cap plate side.

15. The rechargeable battery of claim 14, further comprising
a third insulating member interposed between the first lead tab and the cap plate.

16. The rechargeable battery of claim 1, wherein
a height H is set as the minimum distance between the outer planes of the case and the cap plate,
a diameter D is set as the maximum distance of the case exterior circumference, and
the ratio of the height to the diameter is 1 or less (H/D≤1).

17. The rechargeable battery of claim 1, wherein
the cap plate and the electrode terminal are formed of stainless steel.
